# EUROPÄISCHE PATENTANMELDUNG

(11) **EP 4 144 431 A1**
(43) Veröffentlichungstag der Anmeldung: **08.03.2023**
(21) Anmeldenummer: 21020448.3
(22) Anmeldetag: 06.09.2021
(51) Int. Cl.: B01D 53/00, B01D 53/04, B01D 53/047

(54) **VERFAHREN UND ANLAGE ZUR TRENNTECHNISCHEN BEARBEITUNG EINES GASGEMISCHS**

(71) Anmelder: Linde GmbH, 82049 Pullach (DE)
(72) Erfinder: Werner, Leitmayr, 82049 Pullach (DE); Helmut, Fritz, 82049 Pullach (DE)
(74) Vertreter: Lu, Jing

(57) **Zusammenfassung**

Die Erfindung betrifft Verfahren (100) zur trenntechnischen Bearbeitung eines Einsatzgasgemischs (E) unter Verwendung einer Druckwechseladsorption (10). In diesem wird zumindest ein Teil eines Niederdruckentnahmestroms (L) aus der Druckwechseladsorption (10) einer thermischen Trennung (20) unterworfen, wobei in der thermischen Trennung (20) eine Rückführfraktion (R) gebildet wird, die in die Druckwechselsadsorptionstrennung (10) rückgeführt wird. In der thermischen Trennung (20) erfolgt eine Gegenstromabkühlung (21) unter Erhalt eines Zweiphasengemischs (M), wobei zumindest ein Teil des Zweiphasengemischs (M) unter Erhalt einer Gasphase (V) und eines Kondensats (C) einer Phasentrennung (22) unterworfen wird. Zumindest ein Teil der Gasphase (V) wird zur Bildung der Rückführfraktion (R) verwendet wird und die Gegenstromabkühlung (21) wird unter Verwendung zumindest eines Teils der Gasphase (V) und zumindest eines Teils eines oder mehrerer Fluidströme (V', C'), die unter Entspannung (23) zumindest eines Teils der Flüssigphase (C) gebildet werden, durchgeführt. Eine entsprechende Anlage ist ebenfalls Gegenstand der vorliegenden Erfindung.

## Beschreibung

Die Erfindung betrifft ein Verfahren und eine Anlage zur trenntechnischen Bearbeitung eines Gasgemischs gemäß den jeweiligen Oberbegriffen der unabhängigen Patentansprüche.

### Hintergrund der Erfindung

Die Druckwechseladsorption (PSA, Pressure Swing Adsorption) wird allgemein zur Trennung von gasförmigen Stoffgemischen verwendet. Bei der PSA nutzt man die unterschiedlich starken Adsorptionskräfte der einzelnen Gasmoleküle oder Atome gegenüber dem eingesetzten Adsorbens aus.

Die PSA und Varianten hiervon, sowie andere Adsorptionsverfahren und die entsprechenden technischen Grundlagen sind umfangreich in der Fachliteratur beschrieben, beispielsweise in dem Artikel von H.-J. Bart und U. v. Gemmingen, "Adsorption", in Ullmann's Encyclopedia of Industrial Chemistry, Onlineveröffentlichung 2012, DOI: 10.1002/14356007.b03_09.pub2.

Lediglich beispielhaft sei dabei für ein der vorliegenden Erfindung zugrundeliegendes Problem das in Tabelle 1 angegebene Stoffgemisch angeführt:

**Tabelle 1**

| **Komponente** | **Konzentration [mol%]** | **Adsorptionskraft** | **Siedepunkt [K] bei 1 bar** |
|---|---|---|---|
| Wasserstoff | 74,700 | Sehr schwach | 20 |
| Kohlenmonoxid | 10,000 | Schwach bis mittel | 102 |
| Kohlendioxid | 15,000 | Stark | 195 (Sublimation) |
| Wasser | 0,3000 | Sehr stark | 373 |

Eine weit verbreitete Anwendung der PSA ist die Gewinnung der schwächer oder am schwächsten adsorbierbaren Komponente(n) in angereicherter oder reiner Form, im Beispiel des in Tabelle 1 angegebenen Gasgemischs also Wasserstoff. In anderen Fällen ist dagegen die Gewinnung der stärker oder am stärksten adsorbierbaren Komponente(n) in angereicherter oder reiner Form, im Beispiel des in Tabelle 1 angegebenen Gasgemischs also Kohlendioxid, von Interesse.

Die vorliegende Erfindung ist nicht auf die Verwendung des in Tabelle 1 angegebenen Gasgemischs oder vergleichbarer Gasgemische beschränkt. Sie eignet sich auch für andere Gasgemische, die stärker und schwächer adsorbierbare Komponenten aufweisen, wie sie weiter unten erläutert sind.

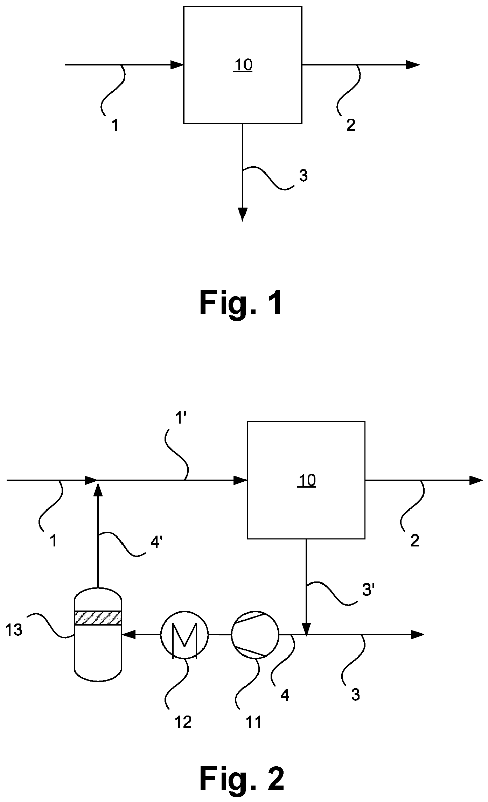

In einem typischen PSA-Verfahren, das in Figur 1 stark schematisiert dargestellt ist, deren Bezugszeichen nachfolgend verwendet werden, werden ein Eintrittsstrom 1 und zwei Ausgangsströme 2, 3 gebildet. Der Eintrittsstrom 1 wird der PSA 10 mit einem Druck zugeführt, der einem Adsorptionsdruck in der PSA 10 entspricht.

Der Austrittsstrom 2 (allgemein als "Hochdruckprodukt" und nachfolgend auch als "Hochdruckentnahmestrom" bezeichnet) wird der PSA 10 annähernd mit dem Eingangsdruck entnommen. Der Austrittsstrom 3 (allgemein als "Niederdruckprodukt" und nachfolgend auch als "Niederdruckentnahmestrom" bezeichnet) wird der PSA dagegen mit deutlich geringerem Druck, und zwar auf einem Desorptionsdruck, entnommen. Der Desorptionsdruck kann auch unteratmosphärisch sein; man spricht dann von einer "Vakuum"-PSA (VPSA).

Ist hier und nachfolgend von "einer PSA" die Rede sei hierunter sowohl ein entsprechendes Verfahren bzw. ein entsprechender Verfahrensschritt, als auch eine zur Durchführung eines derartigen Verfahrens bzw. Verfahrensschritts ausgebildete technische Einrichtung bzw. ein entsprechender Apparat oder eine entsprechende Anlagenkomponente verstanden.

Die Adsorption erfolgt in einer PSA typischerweise unter Verwendung poröser Adsorbentien. Die jeweils adsorbierten Anteile der adsorbierbaren Komponenten hängen insbesondere vom Druck des der PSA zugeführten Eintrittsstroms, also dem Adsorptionsdruck, und von der Selektivität des Adsorbens ab. Das bei der PSA verwendete Adsorbens befindet sich in entsprechenden Adsorptionsbehältern.

Will man für das zuvor gewählte Beispiel, d.h. die Gaszusammensetzung gemäß Tabelle 1, Wasserstoff in reiner Form gewinnen, können, wieder bezogen auf die stark schematisiert in Figur 1 gezeigte Anordnung, die in Tabelle 2 angegebenen typischen Splitfaktoren verwendet werden, wobei mit "Ausbeute" der in den Austrittsstrom 2 übergehende Anteil der Komponenten des Eintrittsstroms 1 bezeichnet ist. Der Splitfaktor entspricht dabei den Volumenanteilen des Eintrittstroms, die (mit unterschiedlichen Gehalten an den jeweiligen Komponenten) in den Austrittsstrom 2 einerseits und 3 andererseits überführt werden (vgl. Tabellenzeile "Menge").

**Tabelle 2**

| | **Einheit** | **Eintrittsstrom 1** | **Austrittsstrom 2** | **Austrittsstrom 3** | |
|---|---|---|---|---|---|
| **Menge** | Nm³/h* | 10000,0 | 6573,9 | 3426,1 | |
| **Druck** | bar | 25,0 | 24,00 | 1,30 | |
| **Temperatur** | °C | 40,0 | 45,0 | 26,5 | |
| | | | | | |

| **Komponente** | **Einheit** | **Eintrittsstrom 1** | **Austrittsstrom 2** | **Austrittsstrom 3** | **Ausbeute** |
|---|---|---|---|---|---|
| Wasserstoff | mol-% | 74,700 | 99,9949 | 26,1641 | 88,00% |
| Kohlenmonoxid | mol-% | 10,000 | 0,0050 | 29,1784 | 0,0329% |
| Kohlendioxid | mol-% | 15,000 | 0,0001 | 43,7818 | 0,0004% |
| Wasser | mol-% | 0,3000 | 0,0000 | 0,8756 | 0,0000% |

| | | | | | |
|---|---|---|---|---|---|
| *Normkubikmeter pro Stunde | | | | | |

Im Beispiel der Tabelle 2 liegen bei dem hier verwendeten Splitfaktor die Komponenten Kohlenmonoxid, Kohlendioxid und Wasser im Austrittsstrom 3 in höherer Konzentration als im Austrittsstrom 2 vor. Der Austrittsstrom 2 umfasst dagegen im Wesentlichen Wasserstoff, was in dieser Ausgestaltung gewünscht ist.

Häufig ist es aber nicht von Interesse, dass eine Komponente, wie im Fall der Tabelle 2 Wasserstoff, im Austrittsstrom 2 besonders rein vorliegt. Will man beispielsweise das Kohlendioxid des Gemischs gemäß Tabelle 2 mittels eines PSA-Verfahrens besonders aufkonzentrieren, kann die Betriebsweise der PSA derart angepasst werden, dass sich die in Tabelle 3 angegebenen Werte ergeben.

Zu diesem Zweck kann (siehe die Tabellenzeilen "Menge" in den Tabellen 2 und 3) der Splitfaktor entsprechend angepasst werden.

**Tabelle 3**

| | **Einheit** | **Eintrittsstrom 1** | **Austrittsstrom 2** | **Austrittsstrom 3** | |
|---|---|---|---|---|---|
| **Menge** | Nm³/h* | 10000,0 | 8201,2 | 1798,8 | |
| **Druck** | bar | 25,0 | 24,00 | 1,30 | |
| **Temperatur** | °C | 40,0 | 45,0 | 16,5 | |
| | | | | | |

| **Komponente** | **Einheit** | **Eintrittsstrom 1** | **Austrittsstrom 2** | **Austrittsstrom 3** | **Ausbeute** |
|---|---|---|---|---|---|
| Wasserstoff | mol-% | 74,700 | 87,4409 | 16,6111 | 96% |
| Kohlenmonoxid | mol-% | 10,000 | 10,7301 | 6,6711 | 88% |
| Kohlendioxid | mol-% | 15,000 | 1,8290 | 75,0500 | 10% |
| Wasser | mol-% | 0,3000 | 0,0000 | 1,6678 | 0,0% |

| | | | | | |
|---|---|---|---|---|---|
| *Normkubikmeter pro Stunde | | | | | |

In dem Beispiel der Tabelle 3 kann der Kohlendioxidgehalt gegenüber dem Ausgangsgemisch des Eintrittsstroms 1 (15 mol%) auf das etwa Fünffache (75 mol%) im Austrittsstrom 3 erhöht werden.

Ist die erreichte Aufkonzentrierung einer mittel bis stark adsorbierbaren Komponente des Eintrittsstroms 1 durch ein entsprechendes Vorgehen noch nicht ausreichend, so kann ein sogenannter Kreislaufbetrieb angewandt werden, bei dem ein Teil des Austrittsstroms 3 wieder dem frischen Eintrittsstrom 1 zugemischt wird. Ein entsprechender Kreislaufbetrieb ist in Figur 2 stark schematisiert dargestellt, wobei nachfolgend wiederum die dort eingesetzten Bezugszeichen verwendet werden.

Das Niederdruckprodukt wird hier zunächst in Form eines Austrittsstroms 3' der PSA 10 entnommen. Ein zurückgeführter Anteil ist in Form eines Stoffstroms 4 dargestellt. Dieser wird mittels eines Verdichters 11, dem ein Nachkühler 12 nachgeschaltet ist, verdichtet, durch einen (Tropfen-)Abscheider 13 geführt, und als Stoffstrom 4' zusammen mit dem Eintrittsstrom 1 in Form eines Sammelstroms 1' der PSA 10 zugeführt. Der nicht zurückgeführte Anteil des Austrittsstroms 3', also beispielsweise ein exportiertes Niederdruckprodukt, ist mit wie zuvor in Figur 1 mit 3 bezeichnet.

Mittels eines entsprechenden Kreislaufbetriebs lässt bei Verwendung des zuvor dargestellten Gemischs die Konzentration des Kohlendioxids im Austrittsstrom 3 weiter erhöhen. Als weiterer Vorteil ergibt sich durch die oft gewünschte höhere Ausbeute der schwach adsorbierbaren Komponenten in Richtung des Austrittsstroms 2. Auch bei hohen Kreislaufquoten von 70% (d.h. einem Verhältnis von 0,7 von Stoffstrom 4 zu Stoffstrom 3') kann die Konzentration von Kohlendioxid jedoch nicht beliebig gesteigert werden. In Tabelle 4 ist eine entsprechende Situation veranschaulicht. Aus Tabelle 4 ist auch erkennbar, dass zwar die Aufkonzentrierung des Kohlendioxids im Austrittsstrom 3 stärker ist, gleichzeitig aber prinzipiell auch der "Verlust" an Kohlendioxid in Richtung des Austrittsstrom 2 steigt.

**Tabelle 4**

| | | **Stoffstrom gemäß** **Figur 2** | | | | | |
|---|---|---|---|---|---|---|---|
| | **Einheit** | **1** | **2** | **3'** | **4** | **3** | |
| Menge | Nm³/h* | 10000,0 | 8201,2 | 4129,3 | 2890,5 | 1238,8 | |
| Druck | bar | 25,0 | 24,00 | 1,30 | 1,30 | 1,30 | |
| Temperatur | °C | 40,0 | 45,0 | 20,0 | 20,0 | 20,0 | **Ausb.** |
| Wasserstoff | mol-% | 74,700 | 84,3765 | 7,4445 | 7,4445 | 7,4445 | 96% |
| Kohlenmonoxid | mol-% | 10,000 | 10,9871 | 3,1726 | 3,1726 | 3,1726 | 88% |
| Kohlendioxid | mol-% | 15,000 | 4,6364 | 88,3597 | 88,3597 | 88,3597 | 10% |
| Wasser | mol-% | 0,3000 | 0,0000 | 1,0232 | 1,0232 | 1,0232 | 0,0% |

| | | | | | | | |
|---|---|---|---|---|---|---|---|
| *Normkubikmeter pro Stunde | | | | | | | |

Eine weitere Steigerung der Aufkonzentrierung ist prinzipiell mit einer Reihenschaltung von zwei oder mehreren PSA-Einheiten mit Zwischenverdichtung möglich, wie hier nicht gesondert veranschaulicht. Allerdings wird auch immer ein Mindestmaß an schwach adsorbierbaren Komponenten im Eintrittsstrom zur PSA benötigt, da nur auf diese Weise der Druckaufbau vorgenommen werden kann.

Damit ist die letzte Stufe einer mehrstufigen PSA prinzipiell definiert. Der Gehalt an schwach bis sehr schwach adsorbierbaren Komponenten muss am Eintritt zu dieser im Bereich von 15 bis 35 mol% liegen. Würde er darunterliegen, würde der PSA-Prozess selbst zusammenbrechen. Ein beliebig hoher Gehalt der gewünschten Komponenten im Austrittsstrom 3 bzw. einen dann entsprechend gebildeten Austrittsstrom ist also auch auf diese Weise nicht erzielbar.

Damit können, aus technischer Sicht, nicht beliebig viele PSA-Einheiten in Reihe geschaltet werden, um eine beliebig hohe Aufkonzentrierung der mittel bis stark adsorbierbaren Komponente im Niederdruckprodukt zu erreichen.

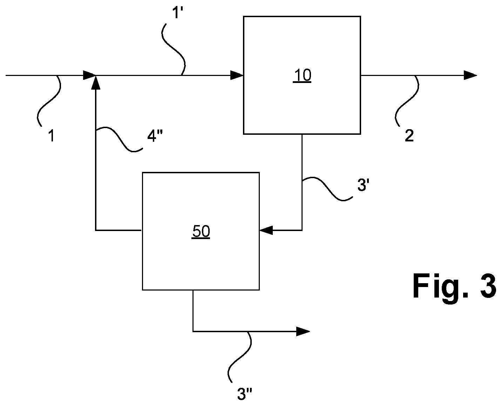

Es ist ferner bekannt, einen Entnahmestrom 3', wie er in Figur 3' dargestellt ist, einer thermischen Trennung zuzuführen und in dieser thermischen Trennung die höher siedenden Komponenten, die typischerweise zugleich in der PSA stärker adsorbieren, zumindest zum Teil abzuscheiden. Eine verbleibende Gasphase, die damit überwiegend die tiefer siedenden Komponenten enthält, die typischerweise zugleich in der PSA schwächer adsorbieren, kann dann, anstelle des in Figur 2 veranschaulichten Stoffstroms 4', in die PSA zurückgeführt werden.

Eine entsprechende Variante ist in Figur 3 in stark verallgemeinerter Form veranschaulicht, wobei die thermische Trennung hier mit 50 angegeben ist. Nachfolgend wird anstelle des Begriffs "thermische Trennung" auch der Begriff "Tieftemperaturtrennung" verwendet. Ein Stoffstrom 4" aus der thermischen Trennung ist an den tiefer siedenden Komponenten angereichert und an den höher siedenden Komponenten abgereichert, der hier mit 3" bezeichnete Stoffstrom ist dagegen an den höher siedenden Komponenten angereichert und an den tiefer siedenden Komponenten abgereichert.

Die vorliegende Erfindung stellt sich die Aufgabe, Verfahren und Anlagen zur adsorptiven Aufkonzentrierung stark adsorbierbarer Komponenten unter Verwendung einer PSA zu verbessern.

### Offenbarung der Erfindung

Diese Aufgabe wird durch ein Verfahren und eine Anlage zur trenntechnischen Bearbeitung eines Gasgemischs mit den Merkmalen der jeweiligen unabhängigen Patentansprüche gelöst. Ausgestaltungen sind Gegenstand der abhängigen Patentansprüche und der nachfolgenden Beschreibung.

Das erfindungsgemäß vorgeschlagene Verfahren dient zur trenntechnischen Bearbeitung eines Einsatzgasgemischs, das eine erste Komponente oder Komponentengruppe (insbesondere eine oder mehrere in der PSA schwächer adsorbierende, "leichte" Komponenten, die zugleich einen tieferen Siedepunkt aufweisen) und eine zweite Komponente oder Komponentengruppe (insbesondere eine oder mehrere in der PSA stärker adsorbierende, "schwere" Komponenten, die zugleich einen tieferen Siedepunkt aufweisen) enthält.

Wie insoweit für PSA-Verfahren bekannt, wird auch im Rahmen der vorliegenden Erfindung unter Verwendung zumindest eines Teils des Einsatzgasgemischs ein Einsatzstrom gebildet, der der besseren Unterscheidbarkeit halber hier als "erster" Trenneinsatzstrom bezeichnet wird, und der die erste Komponente oder Komponentengruppe und die zweite Komponente oder Komponentengruppe enthält. Der Trenneinsatzstrom wird auf Einspeisedruck einer PSA, also einer Druckwechselsadsorptionstrennung, zugeführt.

Aus der Druckwechselsadsorptionstrennung werden ein Hochdruckentnahmestrom auf einem Druck in einem ersten Druckbereich und ein Niederdruckentnahmestrom auf einem Druck in einem zweiten Druckbereich unterhalb des ersten Druckbereichs entnommen, wobei die erste Komponente oder Komponentengruppe aus dem ersten Trenneinsatzstrom in der Druckwechselsadsorptionstrennung zu einem größeren Anteil in den Hochdruckentnahmestrom und zu einem geringeren Anteil in den Niederdruckentnahmestrom überführt wird, und wobei die zweite Komponente oder Komponentengruppe aus dem ersten Trenneinsatzstrom in der Druckwechselsadsorptionstrennung zu einem geringeren Anteil in den Hochdruckentnahmestrom und zu einem größeren Anteil in den Niederdruckentnahmestrom überführt wird.

Zumindest ein Teil des Niederdruckentnahmestroms wird im Rahmen der Erfindung einer Verdichtung auf einen Druck in einem dritten Druckbereich unterworfen und zur Bildung eines Stoffstroms verwendet, der hier der besseren Unterscheidbarkeit halber als "zweiter Trenneinsatzstrom" bezeichnet wird. Letzterer wird auf dem Druck in dem dritten Druckbereich einer thermischen Trennung (Tieftemperaturtrennung) unterworfen.

In der thermischen Trennung wird zumindest ein Teil des zweiten Trenneinsatzstroms durch Abkühlen auf dem Druck in dem dritten Druckbereich einer Teilkondensation unter Erhalt einer ersten Gasphase und eines ersten Kondensats (nachfolgend auch als "erste Flüssigphase" bezeichnet) unterworfen. Ferner werden in der thermischen Trennung durch Entspannen zumindest eines Teils des ersten Kondensats, insbesondere von dem Druck in dem dritten Druckbereich auf einen Druck in einem vierten Druckbereich unterhalb des dritten Druckbereichs ("Flashen") eine zweite Gasphase und ein zweites Kondensat ("zweite Flüssigphase") gebildet.

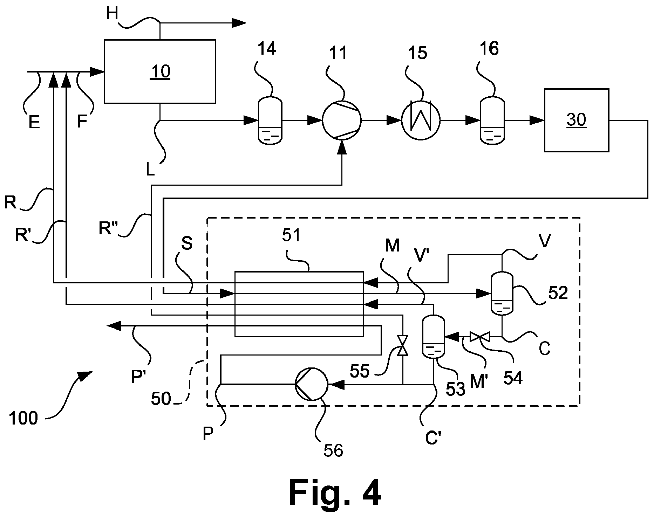

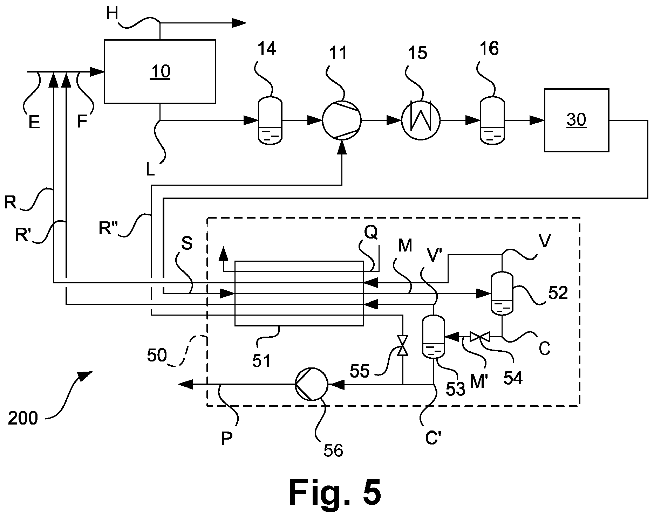

Erfindungsgemäß wird nun ein erster Anteil des zweiten Kondensats flüssig auf Druck gebracht und aus dem Verfahren ausgeführt. Bevor der flüssig auf Druck gebrachte erste Anteil des zweiten Kondensats aus dem Verfahren ausgeführt wird, kann er entweder, wie weiter unten nochmals erläutert und in Figur 4 veranschaulicht, in einem in der thermischen Trennung verwendeten Wärmetauscher verdampft und damit als Kältemittel verwendet werden, oder er kann, wie in Figur 5 veranschaulicht, flüssig aus dem Verfahren ausgeführt werden, in welchem Fall ein zusätzliches Kältemittel in der thermischen Trennung verwendet werden kann. Ein zweiter Anteil des zweiten Kondensats wird dagegen verdampft und bei der Bildung des zweiten Trenneinsatzstroms verwendet.

Durch die erfindungsgemäß vorgeschlagene Entspannung und Rückführung des zweiten Anteils des zweiten Kondensats lässt sich gemäß dem Prinzip einer Wärmepumpe in besonders vorteilhafter Weise Kälte für die Tieftemperaturtrennung generieren. Der rückgeführte Anteil liegt, wie ein Kältemittel in einem Kältemittelkreislauf, dabei zunächst in kondensiertem Zustand vor, wird unter Abkühlung des zweiten Trenneinsatzstroms im Gegenstrom zu diesem verdampft, anschließend bei der Bildung des zweiten Trenneinsatzstroms rückverdichtet, und wieder einer Kondensation in der thermischen Trenneinheit unterworfen.

Die Druckbeaufschlagung des ersten Anteils des zweiten Kondensats in flüssigem Zustand ermöglicht einen Verzicht auf eine gasförmige Verdichtung und erleichtert damit die bauliche Realisierung des erfindungsgemäßen Verfahrens.

Insbesondere wird in der thermischen Trennung zumindest ein Teil des zweiten Trenneinsatzstroms unter Verwendung einer Gegenstromabkühlung und unter Erhalt eines Zweiphasengemischs einer Teilkondensation unterworfen, wobei zumindest ein Teil des Zweiphasengemischs unter Erhalt der ersten Gasphase und des ersten Kondensats einer ersten Phasentrennung unterworfen wird. Die Bildung des zweiten Kondensats und der zweiten Gasphase erfolgt insbesondere ohne weitere Abkühlung in einem Wärmetauscher, sondern lediglich durch eine Entspannung (und ggf. hierdurch erfolgende Abkühlung) des ersten Kondensats.

Zumindest ein Teil der ersten und ggf. zweiten Gasphase kann hierbei zur Bildung einer Rückführfraktion verwendet werden, und zwar grundsätzlich wie in Figur 3 bezüglich des Stoffstroms 4" veranschaulicht und oben beschrieben.

Die Gegenstromabkühlung wird insbesondere im Gegenstrom zu zumindest einem Teil der ersten und ggf. zweiten Gasphase und zu zumindest einem Teil des zweiten Anteils der zweiten Flüssigphase durchgeführt. Ferner wird entweder der flüssig auf Druck gebrachte erste Anteil der zweiten Flüssigphase, ein Teil hiervon, und/oder ein geeignetes separates Kältemittel eingesetzt.

Mit anderen Worten kann das Abkühlen zumindest eines Teils des zweiten Trenneinsatzstroms auf dem Druck in dem dritten Druckbereich zu dessen Teilkondensation in der Tieftemperaturtrennung im Rahmen der vorliegenden Erfindung insbesondere unter Verwendung eines Gegenstromwärmetauschers durchgeführt werden, in dem zumindest ein Teil der ersten Gasphase erwärmt und zumindest ein Teil des zweiten Anteils des zweiten Kondensats verdampft wird.

Wie bereits oben erwähnt, ist das erste Kondensat gegenüber dem zweiten Trenneinsatzstrom insbesondere an der ersten Komponente oder Komponentengruppe abgereichert und an der zweiten Komponente oder Komponentengruppe angereichert, und das zweite Kondensat ist insbesondere gegenüber dem ersten Kondensat an der ersten Komponente oder Komponentengruppe abgereichert und an der zweiten Komponente oder Komponentengruppe angereichert.

Wie bereits erwähnt, wird durch die erfindungsgemäße Rückführung ein verbesserter Betrieb der thermischen Trennung nach dem Prinzip einer Wärmepumpe erzielt. Hierbei wird der verdampfte und bei der Bildung des zweiten Trenneinsatzstroms verwendete zweite Anteil des zweiten Kondensats insbesondere zumindest zu einem Teil mit dem Niederdruckentnahmestrom oder einem Teil hiervon der Verdichtung auf den Druck in einem dritten Druckbereich unterworfen.

In dem erfindungsgemäß vorgeschlagenen Verfahren kann der zweite Trenneinsatzstrom insbesondere unter Verwendung zumindest eines Teils des Niederdruckentnahmestroms gebildet werden, welcher in geeigneter Weise aufbereitet und beispielsweise von störenden Komponenten befreit wird.

Im Rahmen der vorliegenden Erfindung kann der dritte Druckbereich insbesondere bei 10 bis 80 bar liegen. Der Adsorptionsdruck in der PSA kann in geeigneter Weise ausgewählt werden. Im Rahmen der vorliegenden Erfindung kann eine auf einem überatmosphärischen Desorptionsdruck, betriebene PSA aber auch eine eingangs erläuterte VPSA zum Einsatz kommen.

Die Gegenstromabkühlung und die Entspannung zumindest eines Teils des ersten Kondensats zur Bildung des zweiten Kondensats kann im Rahmen der Erfindung insbesondere derart durchgeführt werden, dass die zweite Flüssigphase auf einer Temperatur und einem Druck vorliegt, die derart sind, dass das zweite Kondensat bei der entsprechenden Erwärmung vollständig verdampfbar ist. Die konkreten Werte wählt der Fachmann dabei unter Berücksichtigung der jeweiligen Zusammensetzung der beteiligen Stoffgemische. Durch eine zweistufige Verdampfung kann eine besonders vorteilhafte Anpassung des Wärmetauschdiagramms erzielt werden.

Die Gegenstromabkühlung kann im Rahmen der vorliegenden Erfindung insbesondere auf bis auf eine Temperatur von ―30 bis ―100 °C durchgeführt werden, und die Entspannung zumindest eines Teils des ersten Kondensats zur Bildung des zweiten Zweiphasengemischs kann insbesondere auf einen (Absolut-)Druck von 1 bis 40 bar, insbesondere 1 bis 10 oder 1 bis 15 bar, durchgeführt werden. Dieser Druck richtet sich insbesondere auch nach dem dritten Druckniveau.

In dem erfindungsgemäß vorgeschlagenen Verfahren umfasst die erste Komponente oder Komponentengruppe zumindest eine der Komponenten Wasserstoff, Methan, Stickstoff, Sauerstoff und/oder Kohlenmonoxid oder stellt eine entsprechende Komponente dar, und die zweite Komponente oder Komponentengruppe umfasst insbesondere zumindest eine der Komponenten Kohlendioxid, Ethan, Ethylen, Propan oder Butan oder stellt eine solche Komponente dar.

Im Rahmen der vorliegenden Erfindung kann die thermische Trennung ohne ein zusätzliches Kältemittel durchgeführt, werden, so dass auf entsprechende Kältemittelkreisläufe und dergleichen verzichtet werden kann. In diesem Fall kann, wie erwähnt, der flüssig auf Druck gebrachte erste Anteil des zweiten Kondensats, bevor er aus dem Verfahren ausgeführt wird, in der thermischen Trennung bzw. dem erwähnten Gegenstromwärmetauscher verdampft und damit als Kältemittel verwendet werden. Alternativ ist auch der Einsatz eines separaten Kältemittels in der thermischen Trennung möglich. Auch eine Kombination beider Alternativen ist möglich.

Ferner wird im Rahmen der vorliegenden Erfindung die Gegenstromabkühlung insbesondere mit keinen weiteren Einsatzströmen als dem zweiten Trenneinsatzstrom gespeist, beispielsweise mit keinen Einsatzströmen aus einer Kohlendioxidentfernung.

Generell sollen im Rahmen der vorliegenden Anmeldung, falls verwendet, die Begriffe "angereichert" und "abgereichert" sich allgemein auf einen Gehalt in einem Ausgangsfluid beziehen, aus dem das jeweils betrachtete Fluid gewonnen wird. Das Fluid wird als angereichert bezeichnet, wenn dieses zumindest den 1,1-fachen, 1,5-fachen, 2-fachen, 5-fachen, 10-fachen 100-fachen oder 1.000-fachen Gehalt einer entsprechenden Komponente, bezogen auf das Ausgangsfluid enthält. Entsprechend wird das Fluid als abgereichert bezeichnet, wenn dieses höchstens den 0,9-fachen, 0,5-fachen, 0,1-fachen, 0,01-fachen oder 0,001-fachen Gehalt einer entsprechenden Komponente, bezogen auf das Ausgangsfluid, enthält.

Zu der erfindungsgemäß bereitgestellten Anlage und ihren Merkmalen sei auf den entsprechenden unabhängigen Vorrichtungsanspruch und die obigen Erläuterungen bezüglich des erfindungsgemäßen Verfahrens ausdrücklich verwiesen, da diese eine entsprechende Vorrichtung in gleicher Weise betreffen. Entsprechendes gilt insbesondere für eine Ausgestaltung einer entsprechenden Vorrichtung, die vorteilhafterweise zur Ausführung eines entsprechenden Verfahrens in einer beliebigen Ausgestaltung eingerichtet ist.

Die Erfindung wird nachfolgend unter Bezugnahme auf die Figuren, die eine Ausgestaltung der vorliegenden Erfindung gegenüber dem Stand der Technik veranschaulichen, weiter erläutert.

### Kurze Beschreibung der Figuren

Die Figuren 1 bis 3 zeigen nicht erfindungsgemäße Anordnungen.
Figur 4 zeigt eine Anordnung gemäß einer Ausgestaltung der Erfindung.
Figur 5 zeigt eine Anordnung gemäß einer Ausgestaltung der Erfindung.

### Ausführliche Beschreibung der Zeichnungen

In der obigen und der nachfolgenden weiteren Beschreibung wurden bzw. werden nicht erfindungsgemäße und gemäß Ausgestaltungen der Erfindung ausgebildete Anlagen und anhand dieser entsprechende Verfahrensschritte beschrieben. Lediglich der Einfachheit halber, und zur Vermeidung von unnötigen Wiederholungen, wurden bzw. werden dabei für Verfahrensschritte und Anlagenkomponenten (beispielsweise einen Abkühlschritt und einen hierzu verwendeten Wärmetauscher) dieselben Bezugszeichen und Erläuterungen verwendet. In den Figuren werden für gleiche oder vergleichbare Komponenten identische Bezugszeichen verwendet und lediglich der Übersichtlichkeit halber nicht wiederholt erläutert.

Die Figuren 1 bis 3 wurden bereits oben erläutert.

In Figur 4 und 5 sind Verfahren gemäß Ausgestaltungen der Erfindung veranschaulicht und insgesamt mit 100 bzw. 200 bezeichnet.

Die in Figur 4 und 5 gezeigten Apparate tragen dieselben Bezugszeichen wie die in den Figuren 1 bis 3 veranschaulichten. Eine PSA ist mit 10, ein saugseitig eines Verdichters 11 angeordneter Behälter mit 14, ein Nachkühler mit 15, ein stromab hiervon angeordneter weiterer Behälter mit 16 und eine Aufbereitungseinrichtung, beispielsweise zur Entfernung unerwünschter Komponenten, mit 30 angegeben. Eine Tieftemperaturtrennung ist wie in Figur 3 mit 50 angegeben, jedoch hier mit Details gemäß erfindungsgemäßen Ausgestaltungen veranschaulicht. Die Tieftemperaturtrennung 50 umfasst einen Gegenstrom- bzw. Plattenwärmetauscher 51, Abscheider 52 und 53 und Entspannungsventile 54 und 55.

In den in Figur 4 und 5 veranschaulichten Anordnungen sind ferner ein frisch zugeführtes Gasgemisch mit E (zuvor 1), ein daraus gebildeter Eintrittsstrom in die PSA 10, also ein erster Trenneinsatzstrom, mit F (zuvor 1'), ein Hochdruckaustrittsstrom mit C (zuvor 2), ein Niederdruckaustrittsstrom mit L (zuvor 3'), ein zweiter Trenneinsatzstrom mit S (zuvor ebenfalls 3') Rückführströme mit R, R' und R" (zuvor 4") bezeichnet. In den Figuren 4 und 5 sind mit M ein erstes Zweiphasengemisch, mit M' ein zweites Zweiphasengemisch, mit C ein erstes Kondensat und mit C' ein zweites Kondensat bezeichnet.

Der Strom L wird in den Ausgestaltungen der Figur 4 und 5 durch die Verdichtung in dem Verdichter L im Gegensatz zum Strom 1 durch eine vergleichsweise mäßige Abkühlung partiell kondensieren. Eine derartige partielle Kondensation ist in den beschriebenen Fällen prinzipiell immer möglich, da die stark adsorbierbaren Komponenten auch einen vergleichsweise hohen Siedepunkt im Vergleich zu den nur leicht adsorbierbaren Komponenten aufweisen. Dabei kommt es in den Kondensaten C und C" zu einer starken Aufkonzentrierung der stark adsorbierbaren Komponente(n). Im Gegenzug ist die Konzentration der schwach adsorbierbaren Komponenten(n) den Gasphasen V und V" wiederum hoch.

Der Niederdruckaustrittsstrom L wird gemäß den Figuren 4 und 5 zumindest zu einem Teil dem Verdichter 11 zugeführt und in diesem verdichtet. Der entsprechende, ggf. nach zusätzlicher Behandlung in der Einheit 30, erhaltene zweite Trenneinsatzstrom S wird wie nachfolgend erläutert weiter behandelt.

Gemäß den Figuren 4 und 5 wird der Trenneinsatzstrom S in dem Plattenwärmetauscher 51 unter Erhalt des ersten Zweiphasenstroms M abgekühlt, welcher in den Abscheider 52 eingespeist wird. Dem Abscheider 52 werden eine erste Gasphase V und eine erste Flüssigphase C entnommen, wobei die erste Gasphase V in Form des Rückführstroms R in die PSA 10 zurückgespeist, d.h. zur Bildung des Eintrittsstroms F verwendet wird.

Das erste Kondensat C wird gemäß den Figuren 4 und 5 unter Bildung eines zweiten Zweiphasengemischs M' an dem Entspannungsventil 54 entspannt und in dem Abscheider 53 werden ein zweites Kondensat C' und eine zweite Gasphase V' gebildet. Zumindest ein Teil der zweiten Gasphase V' wird dann vorteilhafterweise als weiterer Rückführstrom verwendet, der in Figur 6 mit R' bezeichnet ist. Der weitere Rückführstrom R' kann entweder, falls die Drücke dies zulassen, erneut der PSA 10 (wie veranschaulicht) oder zusammen mit dem Niederdruckaustrittsstrom L oder dessen entsprechend verwendeten Teil wieder der Verdichtung in dem Verdichter 11 und danach der partiellen Kondensation unterworfen werden.

Das zweite Kondensat C' wird zu einem ersten Teil in einer Pumpe 56 flüssig druckbeaufschlagt und zur Bereitstellung eines Verfahrensprodukts P verwendet und zu einem zweiten Anteil an dem Ventil 55 entspannt, dann in dem Plattenwärmetauscher 51 verdampft, und zu dem Verdichter 11 zurückgeführt und auf diese Weise erneut zur Bildung des zweiten Trenneinsatzstroms S verwendet.

Die Ausgestaltungen gemäß den Figuren 4 und 5 unterscheiden sich dadurch, dass in der Ausgestaltung gemäß Figur 4 der erste Teil des in der Pumpe 56 flüssig druckbeaufschlagten zweiten Kondensats C' in dem Gegenstromwärmetauscher zu einem Stoffstrom P' verdampft wird, d.h. dieser Stoffstrom als Kältemittel verwendet wird, und dass in der Ausgestaltung gemäß Figur 5 der erste Teil des in der Pumpe 56 flüssig druckbeaufschlagten zweiten Kondensats C' flüssig ausgeleitet und stattdessen ein separates Kältemittel in Form eines Stoffstroms Q verwendet wird. Der im Rahmen der Erfindung erzielbare Vorteil liegt nun insbesondere darin, dass sich auch bei Kreislaufquoten von 0,7 bis 1,0 der Gehalt an stark adsorbierbaren Komponenten im Kreislauf nicht beliebig ansteigt, da diese auskondensieren und so gezielt und selektiv ausgeschleust werden können. Die Ausbeute der leicht adsorbierbaren Komponenten steigt bei diesem Verfahren auf nahezu 100%.

Die Vorteile der zuletzt erläuterten Ausgestaltung der Erfindung können anhand der nachfolgenden Tabelle 4 erläutert werden, in der F das dem Verfahren unterworfene Gasgemisch, C den Hochdruckaustrittsstrom, L den Niederdruckaustrittsstrom und C' den aus der weiteren Flüssigphase gebildeten Exportstrom darstellt (zugleich Bezugszeichen gemäß Figur 6).

**Tabelle 4**

| | **Einheit** | **F** | **C** | **L** | **C'** | |
|---|---|---|---|---|---|---|
| Menge | Nm³/h* | 10000,0 | 8648,2 | 2137,9 | 1321,4 | |
| Druck | bar | 24,0 | 23,50 | 0,10 | 39,00 | |
| Temperatur | °C | 40,0 | 41,0 | 28,5 | 40,0 | **Ausb.** |
| Wasserstoff | mol-% | 74,700 | 86,3664 | 14,5574 | 0,0411 | 99,99% |
| Kohlenmonoxid | mol-% | 10,000 | 11,4996 | 6,3435 | 0,4125 | 99,45% |
| Kohlendioxid | mol-% | 15,000 | 2,1341 | 77,6965 | 99,5463 | 12,30% |
| Wasser | mol-% | 0,3000 | 0,0000 | 1,4032 | 0,0000 | 0,00% |

| | | | | | | |
|---|---|---|---|---|---|---|
| *Normkubikmeter pro Stunde | | | | | | |

Alle bisher getroffenen Aussagen lassen sich auf ähnliche Stoffgemische mit stärker und schwächer adsorbierenden Komponenten übertragen. So kann man in allen Erläuterungen und in der praktischen Anwendung Kohlendioxid durch Ethan oder Propan ersetzen. Die nachfolgende Tabelle 5 gibt dazu die entsprechenden Adsorptionskräfte und Siedepunkte an.

**Tabelle 5**

| **Komponente** | **Konzentration [mol%]** | **Adsorptionskraft** | **Siedepunkt [K] bei 1 bar** |
|---|---|---|---|
| Wasserstoff | 74,700 | Sehr schwach | 20 |
| Kohlenmonoxid | 10,000 | Schwach bis mittel | 102 |
| Kohlendioxid | 15,000 | Stark | 195 (Sublimation) |
| Ethan | | Stark | 184 |
| Propan | | Stark | 231 |
| Wasser | 0,3000 | Sehr stark | 373 |

Allen Verfahren gemeinsam ist der Wunsch nach Anreicherung einer gut bis stark adsorbierbaren Komponente, welche für gewöhnlich auch einen höheren Siedepunkt als die schwächer adsorbierbaren Komponenten hat.

Ein konkretes Beispiel aus der Technik ist die Gewinnung von gasförmigen Kohlendioxid für die sog. Enhanced Oil Recovery) aus einer bekannten Dampfreformierung (SMR, Steam Methane Reforming), die zur Erzeugung von Wasserstoff aus Kohlenwasserstoffen dient. Man kann dabei eine erfindungsgemäß vorgenommene Ausschleusung von Kohlendioxid mittels PSA dabei sowohl im Restgasstrom, als auch im Feedgasstrom zur bereits vorhandenen Wasserstoff-PSA anordnen.

Die nachfolgende Tabelle 6 veranschaulicht dabei den Fall der Anordnung im Feedgasstrom zur bereits vorhandenen Wasserstoff-PSA (zur Bezeichnung der Ströme vgl. Erläuterungen zu Tabelle 4).

**Tabelle 6**

| | **Einheit** | **F** | **C** | **L** | **C'** | |
|---|---|---|---|---|---|---|
| Menge | Nm³/h* | 10000,0 | 8646,4 | 2202,8 | 1323,6 | |
| Druck | bar | 24,0 | 23,50 | 0,10 | 39,00 | |
| Temperatur | °C | 40,0 | 41,0 | 28,4 | 40,0 | **Ausb.** |
| Wasserstoff | mol-% | 74,700 | 86,3895 | 14,1289 | 0,0333 | 99,99% |
| Kohlenmonoxid | mol-% | 5,000 | 5,7557 | 3,0808 | 0,1767 | 99,53% |
| Kohlendioxid | mol-% | 15,000 | 2,1663 | 76,5272 | 99,1738 | 12,49% |
| Methan | mol-% | 5,0000 | 5,6884 | 4,9013 | 0,6162 | 98,37% |
| Wasser | mol-% | 0,3000 | 0,0000 | 1,3619 | 0,0000 | 0,00% |

| | | | | | | |
|---|---|---|---|---|---|---|
| *Normkubikmeter pro Stunde | | | | | | |

## Patentansprüche

1. Verfahren (100, 200) zur trenntechnischen Bearbeitung eines Einsatzgasgemischs (E), das eine erste Komponente oder Komponentengruppe und eine zweite Komponente oder Komponentengruppe enthält, wobei
- unter Verwendung zumindest eines Teils des Einsatzgasgemischs (E) ein erster Trenneinsatzstrom (F) gebildet wird, der die erste Komponentengruppe und die zweite Komponente oder Komponentengruppe enthält, und der einer Druckwechselsadsorptionstrennung (10) zugeführt wird,
- aus der Druckwechselsadsorptionstrennung (10) ein Hochdruckentnahmestrom (H) auf einem Druck in einem ersten Druckbereich und ein Niederdruckentnahmestrom (L) auf einem Druck in einem zweiten Druckbereich unterhalb des ersten Druckbereichs entnommen werden,
- die erste Komponente oder Komponentengruppe aus dem ersten Trenneinsatzstrom (F) in der Druckwechselsadsorptionstrennung (10) zu einem größeren Anteil in den Hochdruckentnahmestrom (H) und zu einem geringeren Anteil in den Niederdruckentnahmestrom (L) überführt wird,
- die zweite Komponente oder Komponentengruppe aus dem ersten Trenneinsatzstrom (F) in der Druckwechselsadsorptionstrennung (10) zu einem geringeren Anteil in den Hochdruckentnahmestrom (H) und zu einem größeren Anteil in den Niederdruckentnahmestrom (L) überführt wird,
- zumindest ein Teil des Niederdruckentnahmestroms (L) einer Verdichtung (11) auf einen Druck in einem dritten Druckbereich unterworfen und zur Bildung eines zweiten Trenneinsatzstroms (S) verwendet wird, auf dem Druck in dem dritten Druckbereich einer thermischen Trennung (50) unterworfen wird,
- in der thermischen Trennung (50) zumindest ein Teil des zweiten Trenneinsatzstroms (S) durch Abkühlen auf dem Druck in dem dritten Druckbereich einer Teilkondensation unter Erhalt einer ersten Gasphase (V) und eines ersten Kondensats (C) unterworfen wird, und
- in der thermischen Trennung (50) durch Entspannen zumindest eines Teils des ersten Kondensats (C) eine zweite Gasphase (V') und ein zweites Kondensat (C') gebildet werden,
**dadurch gekennzeichnet, dass**
- ein erster Anteil (P) des zweiten Kondensats (C') flüssig auf Druck gebracht und aus dem Verfahren (100) ausgeführt wird, und ein zweiter Anteil (R') des zweiten Kondensats (C') verdampft und bei der Bildung des zweiten Trenneinsatzstroms (S) verwendet wird.

2. Verfahren (100, 200) nach Anspruch 1, bei in dem das erste Kondensat (C) gegenüber dem zweiten Trenneinsatzstrom (S) an der ersten Komponente oder Komponentengruppe abgereichert und an der zweiten Komponente oder Komponentengruppe angereichert ist, und bei dem das zweite Kondensat (C') gegenüber dem ersten Kondensat (C) an der ersten Komponente oder Komponentengruppe abgereichert und an der zweiten Komponente oder Komponentengruppe angereichert ist.

3. Verfahren (100, 200) nach Anspruch 1 oder 2, bei dem das Abkühlen zumindest eines Teils des zweiten Trenneinsatzstroms (S) auf dem Druck in dem dritten Druckbereich zu dessen Teilkondensation in der thermischen Trennung (50) unter Verwendung eines Gegenstromwärmetauschers (51) durchgeführt wird, in dem zumindest ein Teil der ersten Gasphase (V) angewärmt und zumindest ein Teil des zweiten Anteils (R') des zweiten Kondensats (C') verdampft wird.

4. Verfahren (100, 200) nach einem der vorstehenden Ansprüche, bei dem der verdampfte und bei der Bildung des zweiten Trenneinsatzstroms (S) verwendete zweite Anteil (R") des zweiten Kondensats (C') zumindest zu einem Teil mit dem Niederdruckentnahmestrom (L) oder einem Teil hiervon der Verdichtung (11) auf den Druck in einem dritten Druckbereich unterworfen wird.

5. Verfahren (100, 200) nach einem der vorstehenden Ansprüche, wobei der dritte Druckbereich bei 10 bis 80 bar liegt.

6. Verfahren (100, 200) nach einem der vorstehenden Ansprüche, wobei das Abkühlen auf dem Druck in dem dritten Druckbereich auf eine Temperatur von -30 bis -100 °C durchgeführt wird, und bei dem die Entspannung zumindest eines Teils des ersten Kondensats (C) auf einen Druck von 1 bis 40 bar, insbesondere 1 bis 10 bar, 15 bar durchgeführt wird.

7. Verfahren (100, 200) nach einem der vorstehenden Ansprüche, wobei die erste Komponente oder Komponentengruppe zumindest eine der Komponenten Wasserstoff, Stickstoff, Sauerstoff, Methan und/oder Kohlenmonoxid umfasst oder darstellt, und bei dem die zweite Komponente oder Komponentengruppe zumindest eine der Komponenten Kohlendioxid, Ethan, Ethylen, Propan oder Butan umfasst oder darstellt.

8. Verfahren (100, 200) nach einem der vorstehenden Ansprüche, wobei die thermische Trennung (50) ohne ein zusätzliches Kältemittel durchgeführt wird, wobei der flüssig auf Druck gebrachte erste Anteil (P) des zweiten Kondensats (C') in der thermischen Trennung (50) zumindest zu einem Teil verdampft wird, oder wobei die thermische Trennung (50) unter Verwendung eines zusätzlichen Kältemittels durchgeführt wird.

9. Verfahren (100) nach einem der vorstehenden Ansprüche, wobei das die thermische Trennung mit keinen weiteren Einsatzströmen als dem zweiten Trenneinsatzstrom (S) gespeist wird.

10. Anlage zur trenntechnischen Bearbeitung eines Einsatzgasgemischs (E), das eine erste Komponente oder Komponentengruppe und eine zweite Komponente oder Komponentengruppe enthält, wobei die Anlage dazu eingerichtet ist,
- unter Verwendung zumindest eines Teils des Einsatzgasgemischs (E) einen ersten Trenneinsatzstrom (F) zu bilden, der die erste Komponentengruppe und die zweite Komponente oder Komponentengruppe enthält, und diesen einer Druckwechselsadsorptionstrennung (10) zuzuführen,
- aus der Druckwechselsadsorptionstrennung (10) einen Hochdruckentnahmestrom (H) auf einem Druck in einem ersten Druckbereich und einen Niederdruckentnahmestrom (L) auf einem Druck in einem zweiten Druckbereich unterhalb des ersten Druckbereichs zu entnehmen,
- wobei die erste Komponente oder Komponentengruppe aus dem ersten Trenneinsatzstrom (F) in der Druckwechselsadsorptionstrennung (10) zu einem größeren Anteil in den Hochdruckentnahmestrom (H) und zu einem geringeren Anteil in den Niederdruckentnahmestrom (L) überführt wird,
- wobei die zweite Komponente oder Komponentengruppe aus dem ersten Trenneinsatzstrom (F) in der Druckwechselsadsorptionstrennung (10) zu einem geringeren Anteil in den Hochdruckentnahmestrom (H) und zu einem größeren Anteil in den Niederdruckentnahmestrom (L) überführt wird,
- zumindest ein Teil des Niederdruckentnahmestroms (L) einer Verdichtung (11) auf einen Druck in einem dritten Druckbereich zu unterwerfen und zur Bildung eines zweiten Trenneinsatzstroms (S) zu verwenden und auf dem Druck in dem dritten Druckbereich einer thermischen Trennung (50) zu unterwerfen,
- in der thermischen Trennung (50) zumindest einen Teil des zweiten Trenneinsatzstroms (S) durch Abkühlen auf dem Druck in dem dritten Druckbereich einer Teilkondensation unter Erhalt einer ersten Gasphase (V) und eines ersten Kondensats (C) zu unterwerfen, und
- in der thermischen Trennung (50) durch Entspannen zumindest eines Teils des ersten Kondensats (C) eine zweite Gasphase (V') und ein zweites Kondensat (C') zu bilden,
**gekennzeichnet durch** Mittel, die dafür eingerichtet sind,
- einen ersten Anteil (P) des zweiten Kondensats (C') flüssig auf Druck zu bringen und aus dem Verfahren (100) auszuführen wird, und einen zweiten Anteil (R') des zweiten Kondensats (C') zu verdampfen und bei der Bildung des zweiten Trenneinsatzstroms (S) zu verwenden.

11. Anlage nach Anspruch 10, die zur Durchführung eines Verfahrens nach einem der Ansprüche 1 bis 9 eingerichtet ist.
